# EUROPEAN PATENT SPECIFICATION

(11) **EP 4 258 009 B1**
(45) Date of publication and mention of the grant of the patent: **03.09.2025**
(21) Application number: 23153861.2
(22) Date of filing: 30.01.2023
(51) Int. Cl.: G01S 7/41, G01S 7/48, G01S 13/931, G01S 17/931, G01S 7/295, G06V 10/44, G06V 10/82

(54) **SCENE CLASSIFICATION METHOD, APPARATUS AND COMPUTER PROGRAM PRODUCT**
SZENENKLASSIFIZIERUNGSVERFAHREN, VORRICHTUNG UND COMPUTERPROGRAMMPRODUKT
PROCÉDÉ, APPAREIL ET PRODUIT PROGRAMME INFORMATIQUE DE CLASSIFICATION DE SCÈNES

(30) Priority: 04.04.2022 GB 202205533
(43) Date of publication of application: 11.10.2023
(73) Proprietor: Aptiv Technologies AG, 8200 Schaffhausen (CH)
(72) Inventor: SCHOELER, Markus, Dublin, 2 (IE); MEUTER, Mirko, Dublin, 2 (IE)
(74) Representative: Lewis Silkin LLP

(56) References cited:
- WO-A1-2018/158293
- YOU-CHEN LIN ET AL: "Using Deep Learning and Gaussian Mixture Models for Road Scene Segmentation", INTERNATIONAL JOURNAL OF ENGINEERING SCIENCE AND INNOVATIVE TECHNOLOGY, 1 November 2017 (2017-11-01), pages 27, XP055770726, Retrieved from the Internet <URL:https://www.ijesit.com/Volume%206/Issue%206/IJESIT201706_04.pdf> [retrieved on 20210201]

## Description

### Field

The present disclosure relates to a scene classification method, apparatus, and computer program product. The disclosure is particularly relevant to radar-centric environment perception systems and methods, and most particularly for detecting the scene in which an ego vehicle is currently driving using radar-only data.

### Background

Radar-centric environment perception in automotive vehicles is usually tackled either by using traditional detection-based methods combined with a tracker, or by utilizing machine learning to predict object locations, estimating free-space and/or tracking objects. The environment in which the vehicle is operating has a significant bearing on the performance, such as the detection rate or false positive rate, of those algorithms. Scenes, such as parking garages or tunnels for instance, which have many reflecting surfaces in the proximity of the vehicle, significantly affect the performance of both traditional and machine-learning algorithms for radar-based perception. Furthermore, different algorithms and models may provide better performance in some scenes, and not others. As such, accurately detecting the scene the vehicle is currently in may allow system parameters, such as settings and behaviours, to be adjusted accordingly, for example by adaptive fusion, for thereby providing improved driver assistance systems in cars and other vehicles.

WO2018/158293 discloses at least one memory and a plurality of computational units which perform a plurality of filter operations between an input feature map and a filter map book for classification of at least one object represented by the input feature map. Each filter operation of the plurality of filter operations includes a plurality of combinational operations. A 2D max pooling or average pooling is applied to partition the input feature map into a set of non-overlapping pooling regions. The control logic is configured tc sequentially assign at least two or all combinational operations of the same filter operation to the same computational unit of the plurality of computational units.

Using Deep Learning and Gaussian Mixture Models for Road Scene Segmentation of Lin ET AL presents a pixel labs approach for road scene understanding including the region-based segmentation algorithm based on Gaussian mixture models modelling and region merging scheme by using convolution neural networks applying a pooling layer.

Accordingly, there remains a need for improved systems for identifying the environment a vehicle is in.

WO 2018158293 teaches at least one memory and a plurality of computational units which perform a plurality of filter operations between an input feature map and a filter map book for classification of at least one object represented by the input feature map. Each filter operation of the plurality of filter operations includes a plurality of combination operation. The control logic is configured to sequentially assign at least two or all combinational operations of the same filter operation to the same computational unit of the plurality of computational units.

"Using Deep Learning and Gaussian Mixture Models for Road Scene Segmentation" of You-Chen Lin ET AL presents a novel pixel labs approach for road scene understanding including a region-based algorithm based on Gaussian mixture models modeling, and region merging scheme by using two convolution neural networks.

### Summary

According to a first aspect, there is provided a scene classification method for a vehicle sensor system, the method including the steps of: receiving feature maps generated from RADAR or LIDAR sensor data provided by the RADAR or LIDAR vehicle sensor system, wherein the feature maps represent a vehicle-centric coordinate system, and the direction of the rows and columns of the feature maps are parallel with the respective longitudinal and lateral axes of the coordinate system; processing the feature maps using feature pooling of each longitudinal column and lateral row to generate longitudinal column feature pool outputs and lateral row feature pool outputs; generating inner products from the longitudinal and lateral feature pool outputs; and classifying the scene based on the generated inner products.

In this way, a computationally efficient classification method may be provided, which is able to outperform conventional classification architectures in terms of precision and recall performance. That is, by feature pooling the rows and columns of the feature maps, a low dimensional output may be generated, providing for efficient processing. At the same time the longitudinal and lateral pooling architecture leverages an awareness of scene features associated with particular environments to provide a high specificity for scene classification.

In embodiments, the step of generating the inner product includes concatenating the longitudinal and lateral feature pool outputs. In this way, the longitudinal and lateral feature pool outputs for each channel output by the convolutional layers may be linked for subsequent inner product processing.

In embodiments, the longitudinal and lateral feature pooling includes one of maximum or mean feature pooling. In this way, the size of the feature map may be reduced prior to subsequent inner product calculations.

In embodiments, the step of classifying the scene includes generating one or more scene classification scores using the generated inner products. In this way, scenes detected by the sensor system may be classified into one or more different scene categories. These results may then be used to provide scene category information for optimising other processes and systems within the vehicle.

In embodiments, the one or more scene classification scores provide a probability value indicating the probability that the associated scene is detected. In this way, the parameters used during the implementation of other processes and systems within the vehicle may be adjusted based on the probability results.

Scene classification data are derived using only RADAR or LIDAR sensor systems.

Awareness of the driving direction is leveraged to produce highly specific longitudinal and lateral feature pool outputs.

In embodiments, the classification method further includes the step of generating feature maps from the sensor data provided by the vehicle sensor system, wherein the step of generating the feature maps includes processing the sensor data through an object detection system. In this way, the classification method may be implemented as a head on an intermediate sematic representation for the object detection system, thereby capitalising on existing processing operations whilst providing additional classification functionality.

In embodiments, the object detection system includes an artificial neural network architecture. In this way, the classification head may be added to provide additional functionality to an existing trained model.

In embodiments, the artificial neural network architecture is a Radar Deep Object Recognition network, RaDOR.net.

According to a further aspect, there is provided a computer program product including instructions which, when the program is executed by a computer, cause the computer to carry out the steps of the above method.

According to a further aspect, there is provided a non-transitory computer readable medium including instructions, which when executed by a processor, cause the processor to execute the above method.

According to a further aspect, there is provided a scene classification apparatus for processing data from a vehicle sensor system, the apparatus including: an input for receiving feature maps generated from RADAR or LIDAR sensor data provided by the vehicle RADAR or LIDAR sensor system, wherein the feature maps represent a vehicle-centric coordinate system, and the direction of the rows and columns of the feature maps are parallel with the respective longitudinal and lateral axes of the coordinate system; and an encoding and pooling module for processing the feature maps using feature pooling of each longitudinal column and lateral row to generate longitudinal column and lateral row feature pool outputs; an inner product module for generating inner products from the longitudinal and lateral feature pool outputs; and a classifier for classifying the scene based on the generated inner products. In this way, an apparatus may be provided for implementing the above method.

In embodiments, the inner product module is configured to concatenate the longitudinal and lateral feature pool outputs.

In embodiments, the encoding and pooling module is configured to perform one of maximum or mean feature pooling.

In embodiments, the classifier is configured to generate one or more scene classification scores using the generated inner products.

In embodiments, the one or more scene classification scores provide a probability value indicating the probability that the associated scene is detected.

In embodiments, the scene classification apparatus further includes an object detection system for processing sensor data received from the vehicle sensor system to generate the feature maps.

In embodiments, the object detection system includes an artificial neural network architecture.

In embodiments, the artificial neural network architecture is a Radar Deep Object Recognition network, RaDOR.net.

### Brief Description of Drawings

Illustrative embodiments will now be described with reference to the accompanying drawings in which:
Figure 1 shows a schematic illustration of a scene classification system based on an object detection architecture according to an embodiment;
Figure 2 shows a schematic illustration of the scene classification head according to an embodiment;
Figure 3 is a flow diagram of the processing steps employed in the scene classification system shown in Figure 2; and
Figure 4 is a graph comparing the scene classification performance of the illustrative embodiment with a conventional convolutional neural network and max pooling scene classification system.

### Detailed Description

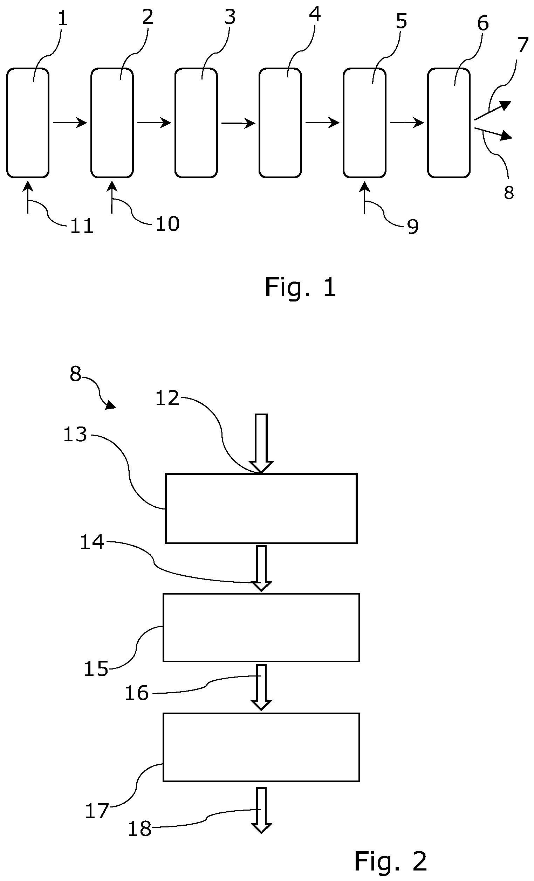

The scene classification system shown in Figure 1 is based on an object detection architecture used to provide object detection and scene classification using radar-only data for an ego vehicle, namely the vehicle within which the radar system is incorporated. As such, the system is able to categorically classify the environment the subject vehicle is in based on the input radar data.

In this embodiment, the object detection architecture is object detection and semantic segmentation system employing a RaDOR-Net (Radar Deep Object Recognition network) architecture. RaDOR-Net is a deep-learning, end-to-end architecture for processing raw CDC (Compressed Data Cube) radar signals to provide semantic object and scene information, such as bounding boxes, free-space and semantic segmentation. The raw radar sensor data 11 from the vehicle's radar sensor system is input and processed through a number of processing layers. In this example, the processing layers include the CDC Domain SubNet 1, a POLAR Domain SubNet 2, a vehicle coordinate system (VCS) Sensor Domain 3, a VCS Fused Domain SubNet 4, a Gated Recurrent Unit (GRU) 5, and a dilated pyramid convolution layer 6. Looktype (scan type), Ego-motion, and Extrinsic Calibration data 11 may be fed into the Polar Domain SubNet 11, and Ego-motion data 10 may be fed into the GRU 5. The output from the Dilated Pyramid 6 is fed to a box head 7. At the same time, the output is fed to the scene classification head 8 for classification operations, as described in further detail below.

The scene classification head 8 is connected after the dilated pyramid convolution layer 6, and is used as a feature extractor. The input information accesses the full activation after the GRU 5 and processes this information in a cascade of layers into the final scene classification scores. In this respect, it will be understood that multiple classifications can be correct at the same time. For example, a rainy scene and approaching a tunnel scene may both be present. As such, the final class activation is transformed using a sigmoid activation function, together with a cross-entropy loss operation for optimization. Sigmoid activation is used to create probabilities for each output. Accordingly, the output scene classification scores provide an indication for each scene category of the probability that a scene is being detected.

With the arrangement described, by branching the scene classification head 8 after the dilated pyramid layer 6, several advantages may be achieved. Firstly, computational complexity is minimized because most calculations performed in the network for bounding box classification are also used for the scene classification head 8. This thereby significantly reduces the complexity at inference and training time compared to an architecture with earlier branching.

Secondly, it allows the scene classification head 8 to be incorporated into existing neural networks. That is, because the branch from the network occurs at the end, the calculations applied to the original output of an existing network remain unchanged. Accordingly, trained existing networks can be used, and their capabilities can simply be extended by the scene classification output, without affecting with the original performance.

Thirdly, data utilization is also improved. The scene classification head works with highly semantic features, already trained on a large dataset. Consequently, less parameters are required for the new scene classification output. This not only reduces computational complexity, but also reduces the number of samples which are required for the model to generalize well.

An illustrative scene classification head 8 is shown in Figure 2. The output from the dilated pyramid convolution layer 6 is fed to the input 12. An encoding and pooling module 13 processes the input data, firstly by using 2D-convolutions to encode local features. The aggregated feature data, is then processed using a longitudinal and lateral feature pooling technique, as is discussed in further detail below. The feature pooling output 14 is then fed to an inner product module 15 to produce a low dimensional, inner product output 16. As such, a final feature vector is generated for scene classification. Accordingly, the inner product output 16 is then fed to a classifier module 17 which classifies the scene and outputs one or more scene classification scores 18.

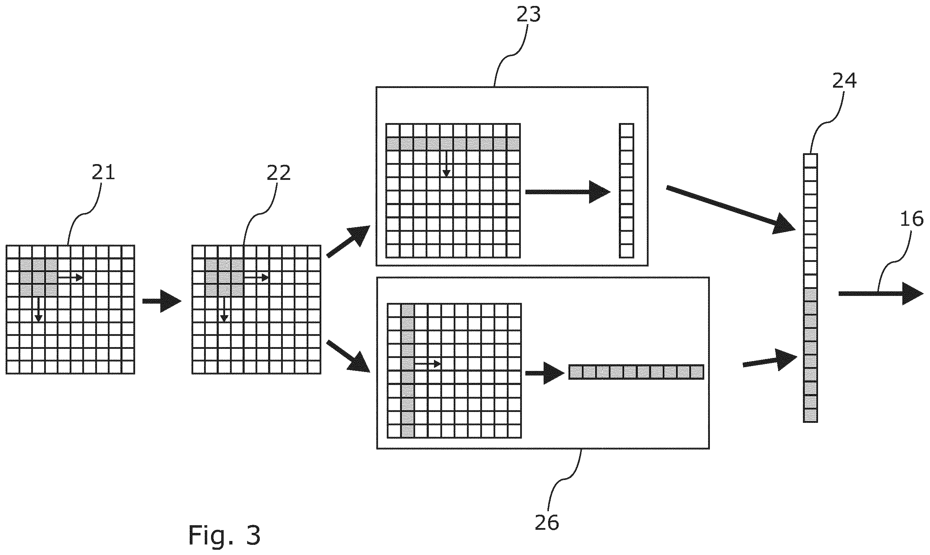

To explain the scene classification method in further detail, Figure 3 shows a flow diagram of the processing steps employed in the scene classification architecture. As mentioned above, the scene classification head 8 utilizes stacked lateral and longitudinal feature pooling, concatenation, and inner product calculations. For simplicity, only a single channel of the multi-channel activations is shown in Figure 3.

As will be understood, the raw CDC radar data is processed through a plurality of convolutional layers within the object detection architecture shown in figure 1. In Figure 3, for simplicity, these are represented by convolutional layers 21 and 22. The output of the object detection architecture produces feature or activation maps in which aggregated features result in highly activated areas within the channel matrices.

As will be understood, the feature maps output by the convolutional layers 21 and 22 follow a vehicle-centric coordinate system. This coordinate system defines the longitudinal and lateral axes along the column and row directions of the feature maps. The ego vehicle's driving direction is along the x axis of this coordinate system.

The feature maps are subjected to longitudinal feature pooling 23 and lateral feature pooling 26 within the encoding and pooling module 13. These pooling operations are used to reduce the dimensions of the feature maps by summarising the features present in the longitudinal columns and lateral rows of the feature maps generated by the convolution layers 21,22. Maximum or mean feature pooling may be used. In maximum feature pooling, the maximum element is taken from each column or row of the feature map. As such, the output after maximum pooling is a feature map containing the most prominent features of each column or row of the previous feature map. In mean feature pooling, the mean average of the elements present in each column or row of the feature map is taken. As such, the output after mean-pooling is a feature map containing the average features for each column or row of the previous feature map.

The lateral and longitudinal feature pooling results are then concatenated and an inner product calculation 24 is produced.

In a scenario where the car approaches a tunnel, the lateral feature pooling 26 will result in stable features during the approach. In contrast, the longitudinal feature pooling 23 will be distance dependent. For instance, if a tunnel is a distance away (e.g. 80m), the features of the tunnel will propagate along the vector as the car approaches. As such, it is possible to efficiently encode distance to scene transitions, for example, approaching tunnel in 40m. Accordingly, scenes of different types will result in different combination of the lateral and longitudinal feature pooling results. By concatenating these, and calculating their inner products, one or more scene classification scores can thereby be produced to provide a probability value indicating the probability that vehicle is in the associated scene category. A probability threshold may be set by which scene classification scores above a specified level are used to confirm the identification of a particular scene.

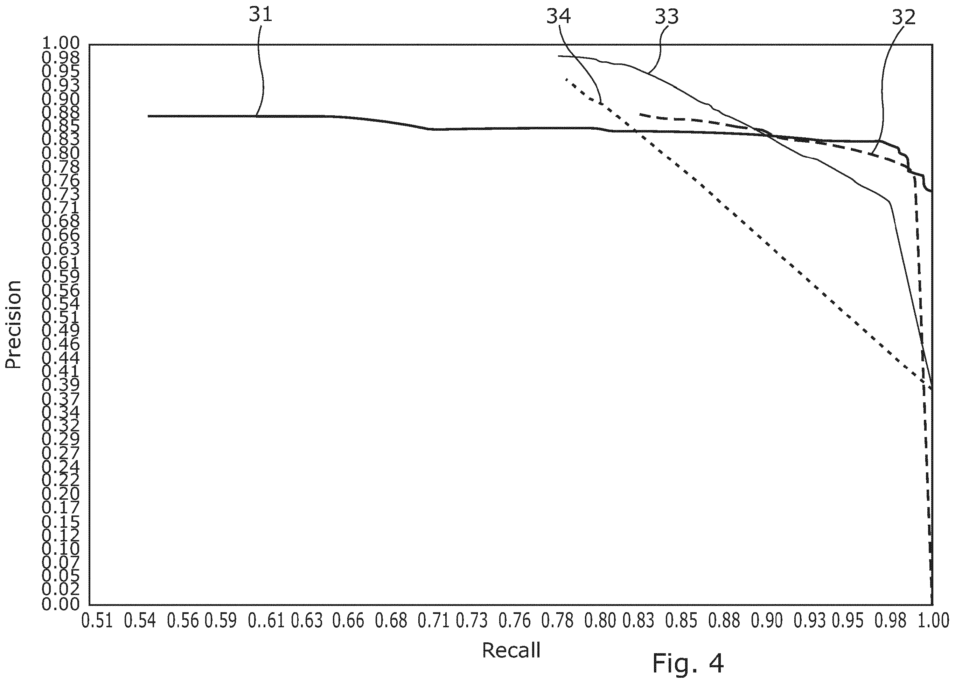

Figure 4 is a graph comparing the scene classification performance of the illustrative embodiment with a conventional convolutional neural network and max pooling scene classification system. The recall-precision performance when the ego vehicle is in a parking garage scene is identified by line 31 for the illustrative embodiment, and contrasted with line 32 associated with a conventional classification system. Equally, the recall-precision performance when the ego vehicle is in a tunnel scene is identified by line 33 for the illustrative embodiment, and contrasted with line 34 associated with a conventional classification system. As shown, in both cases, higher recall and precision values are achieved with the illustrative embodiment.

Accordingly, the above methods and systems allow for highly accurate and computationally efficient scene classification.

It will be understood that the embodiments illustrated above show applications only for the purposes of illustration. In practice, embodiments may be applied to many different configurations, the detailed embodiments being straightforward for those skilled in the art to implement.

For example, although in the above illustrative examples, the scene classification head is implemented using a plurality of modules, it will be understood that this, as well as the object detection architecture generally may be implemented using one or more microprocessors, for instance as part of an embedded device or an automotive controller unit.

It will be appreciated that a vehicle advanced driver assist system can operate the scene classification method as described above and adapt one of more functions of the system according to the classification from the method. In particular, as a non-exclusive list, the system can use the classification from the method for blind spot information, lane departure warning, braking, speed adjustment, parking and so on.

## Claims

1. A scene classification method for a RADAR or LIDAR vehicle sensor system, the method comprising the steps of:
receiving feature maps (21, 22) generated from RADAR or LIDAR sensor data provided by the vehicle RADAR or LIDAR sensor system, wherein the feature maps represent a vehicle-centric coordinate system, and the direction of the rows and columns of the feature maps are parallel with the respective longitudinal and lateral axes of the coordinate system; and
processing the feature maps using longitudinal feature pooling (23) of each longitudinal column and lateral feature pooling (26) of each lateral row to generate longitudinal column feature pool outputs and lateral row feature pool outputs;
generating inner products (24) from the longitudinal column and lateral row feature pool outputs; and
classifying the scene based on the generated inner products (24).

2. A scene classification method according to claim 1, wherein the step of generating the inner product (24) comprises concatenating the longitudinal and lateral feature pool outputs.

3. A scene classification method according to claim 1 or 2, wherein longitudinal (23) and lateral feature pooling (26) comprises one of maximum or mean feature pooling.

4. A scene classification method according to any preceding claim, wherein the step of classifying the scene comprises generating one or more scene classification scores using the generated inner products (24).

5. A scene classification method according to claim **4,** wherein the one or more scene classification scores provide a probability value indicating the probability that the associated scene is detected.

6. A scene classification method according to any preceding claim, further comprising the step of generating feature maps (21, 22) from the sensor data provided by the vehicle sensor system, wherein the step of generating the feature maps (21, 22) comprises processing the sensor data through an object detection system.

7. A scene classification method according to claim 6, wherein the object detection system comprises an artificial neural network architecture.

8. A non-transitory computer readable medium comprising instructions, which when executed by a processor, cause the processor to execute the method according to any one of claims 1-7.

9. A scene classification apparatus for processing data from a vehicle RADAR or LIDAR sensor system, the apparatus comprising:
an input for receiving feature maps (21, 22) generated from RADAR or LIDAR sensor data provided by the vehicle RADAR or LIDAR sensor system, wherein the feature maps represent a vehicle-centric coordinate system, and the direction of the rows and columns of the feature maps are parallel with the respective longitudinal and lateral axes of the coordinate system; and
an encoding and pooling module for processing the feature maps using longitudinal feature pooling (23) of each longitudinal column and lateral feature pooling (26) of each lateral row to generate longitudinal column feature pool outputs and lateral row feature pool outputs;
an inner product module for generating inner products from the longitudinal and lateral feature pool outputs (24); and
a classifier for classifying the scene based on the generated inner products (24).

10. A scene classification apparatus according to claim 9, wherein the inner product module is configured to concatenate the longitudinal and lateral feature pool outputs.

11. A scene classification apparatus according to any of claims 9 or 10, wherein the classifier is configured to generate one or more scene classification scores using the generated inner products (24).

12. A scene classification apparatus according to claim 11, wherein the one or more scene classification scores provide a probability value indicating the probability that the associated scene is detected.

13. A scene classification apparatus according to any of claims 9 to 12, further comprising an object detection system for processing sensor data received from the vehicle sensor system to generate the feature maps.

## Patentansprüche

1. Ein Szenen-Klassifizierungsverfahren für ein RADAR- oder LIDAR-Fahrzeugsensorsystem, wobei das Verfahren die folgenden Schritte umfasst:
Empfangen von Merkmalskarten (21, 22), die aus RADAR- oder LIDAR-Sensordaten erzeugt werden, die von dem Fahrzeug-RADAR- oder Fahrzeug-LIDAR-Sensorsystem bereitgestellt werden, wobei die Merkmalskarten ein fahrzeugzentriertes Koordinatensystem repräsentieren, und die Richtung der Reihen und Spalten der Merkmalskarten parallel zu den entsprechenden Längs- und Seitenachsen des Koordinatensystems verlaufen; und
Verarbeiten der Merkmalskarten unter Verwendung eines longitudinalen Merkmals-Poolings (23) jeder longitudinalen Spalte und eines lateralen Merkmals-Poolings (26) jeder lateralen Reihe, um longitudinale Spalten-Merkmalspool-Ausgaben und laterale Reihen-Merkmalspool-Ausgaben zu erzeugen;
Erzeugen innerer Produkte (24) aus den longitudinalen Spalten- und lateralen Reihen-Merkmalspool-Ausgaben; und
Klassifizieren der Szene basierend auf den erzeugten inneren Produkten (24).

2. Szenen-Klassifizierungsverfahren nach Anspruch 1, wobei der Schritt des Erzeugens des inneren Produkts (24) das Verketten der longitudinalen und lateralen Merkmalspool-Ausgaben umfasst.

3. Szenen-Klassifizierungsverfahren nach Anspruch 1 oder 2, wobei das longitudinale (23) und laterale Merkmals-Pooling (26) entweder ein maximales oder durchschnittliches Merkmals-Pooling umfasst.

4. Szenen-Klassifizierungsverfahren nach einem der vorstehenden Ansprüche, wobei der Schritt des Klassifizierens der Szene das Erzeugen einer oder mehrerer Szene-Klassifizierungsscores unter Verwendung der erzeugten inneren Produkte (24) umfasst.

5. Szenen-Klassifizierungsverfahren nach Anspruch 4, wobei die eine oder mehreren Szenen-Klassifizierungsscores einen Wahrscheinlichkeitswert bereitstellen, der die Wahrscheinlichkeit anzeigt, dass die verbundene Szene erfasst wird.

6. Szenen-Klassifizierungsverfahren nach einem der vorstehenden Ansprüche, ferner umfassend den Schritt des Erzeugens von Merkmalskarten (21, 22) aus den Sensordaten, die von dem Fahrzeugsensorsystem bereitgestellt werden, wobei der Schritt des Erzeugens der Merkmalskarten (21, 22) das Verarbeiten der Sensordaten durch ein Objekterkennungssystem umfasst.

7. Szenen-Klassifizierungsverfahren nach Anspruch 6, wobei das Objekterkennungssystem eine künstliche neurale Netzwerkarchitektur umfasst.

8. Ein nichtflüchtiges computerlesbares Medium, das Anweisungen umfasst, die, wenn sie von einem Prozessor ausgeführt werden, den Prozessor veranlassen, das Verfahren nach einem der Ansprüche 1 bis 7 auszuführen.

9. Szenen-Klassifizierungsvorrichtung für das Verarbeiten von Daten aus einem Fahrzeug-RADAR- oder LIDAR-Sensorsystem, die Vorrichtung umfassend:
eine Eingabe für das Empfangen von Merkmalskarten (21, 22), die aus RADAR- oder LIDAR-Sensordaten erzeugt werden, die von dem Fahrzeug-RADAR- oder LIDAR-Sensorsystem bereitgestellt werden, wobei die Merkmalskarten ein fahrzeugzentriertes Koordinatensystem repräsentieren, und die Richtung der Reihen und Spalten der Merkmalskarten parallel zu den entsprechenden Längs- und Seitenachsen des Koordinatensystems verlaufen; und
ein Codierungs- und Pooling-Modul für das Verarbeiten der Merkmalskarten unter Verwendung eines longitudinalen Merkmals-Poolings (23) jeder longitudinalen Spalte und eines lateralen Merkmals-Poolings (26) jeder lateralen Reihe, um longitudinale Spalten-Merkmalspool-Ausgaben und seitliche Merkmalspool-Ausgaben zu erzeugen;
ein inneres Produktmodul für das Erzeugen innerer Produkte aus den longitudinalen und lateralen Merkmalspool-Ausgaben (24); und
einen Klassifikator für das Klassifizieren der Szene basierend auf den erzeugten inneren Produkten (24).

10. Szenen-Klassifizierungsvorrichtung nach Anspruch 9, wobei das innere Produkt-Modul konfiguriert ist, die longitudinalen und lateralen Merkmalspool-Ausgaben zu verketten.

11. Szenen-Klassifizierungsvorrichtung nach einem der Ansprüche 9 oder 10, wobei der Klassifikator konfiguriert ist, eine oder mehrere Szenen-Klassifizierungsscores unter Verwendung der erzeugten inneren Produkte (24) zu erzeugen.

12. Szenen-Klassifizierungsvorrichtung nach Anspruch 11, wobei die eine oder mehreren Szenen-Klassifizierungsscores einen Wahrscheinlichkeitswert bereitstellen, der die Wahrscheinlichkeit anzeigt, dass die verbundene Szene erfasst wird.

13. Szenen-Klassifizierungsvorrichtung nach einem der Ansprüche 9 bis 12, ferner umfassend ein Objekterkennungssystem für das Verarbeiten von Sensordaten, die von dem Fahrzeugsensorsystem empfangen wurden, um die Merkmalskarten zu erzeugen.

## Revendications

1. Procédé de classification de scènes destiné à un système de capteurs RADAR ou LIDAR du véhicule, le procédé comprenant les étapes suivantes :
la réception de cartes de caractéristiques (21, 22) générées à partir de données de capteur RADAR ou LIDAR fournies par le système de capteurs RADAR ou LIDAR du véhicule, dans lequel les cartes de caractéristiques représentent un système de coordonnées centré sur le véhicule, et la direction des rangées et des colonnes des cartes de caractéristiques est parallèle aux axes longitudinaux et latéraux respectifs du système de coordonnées ; et
le traitement des cartes de caractéristiques à l'aide d'un regroupement de caractéristiques longitudinales (23) de chaque colonne longitudinale et d'un regroupement de caractéristiques latérales (26) de chaque rangée latérale pour générer des sorties du groupe de caractéristiques de colonne longitudinale et des sorties du groupe de caractéristiques de rangée latérale ;
la génération de produits internes (24) à partir des sorties du groupe de caractéristiques de colonne longitudinale et de rangée latérale ; et
la classification de la scène en fonction des produits internes générés (24).

2. Procédé de classification de scènes selon la revendication 1, dans lequel l'étape de génération du produit interne (24) comprend la concaténation des sorties du groupe de caractéristiques longitudinales et latérales.

3. Procédé de classification de scènes selon la revendication 1 ou 2, dans lequel le regroupement de caractéristiques longitudinales (23) et latérales (26) comprend un regroupement parmi le regroupement de caractéristiques maximales ou moyennes.

4. Procédé de classification de scènes selon une quelconque revendication précédente, dans lequel l'étape de classification de scènes comprend la génération d'un ou plusieurs scores de classification de scènes à l'aide des produits internes générés (24).

5. Procédé de classification de scènes selon la revendication 4, dans lequel le ou les scores de classification de scènes fournissent une valeur de probabilité indiquant la probabilité que la scène associée soit détectée.

6. Procédé de classification de scènes selon l'une quelconque des revendications précédentes, comprenant en outre l'étape de génération des cartes de caractéristiques (21, 22) à partir des données de capteur fournies par le système de capteurs du véhicule, dans lequel l'étape de génération des cartes de caractéristiques (21, 22) comprend le traitement des données de capteur par l'intermédiaire d'un système de détection d'objet.

7. Procédé de classification de scènes selon la revendication 6, dans lequel le système de détection d'objet comprend une architecture de réseau neuronal artificiel.

8. Support lisible par ordinateur non transitoire comprenant des instructions, qui, lorsqu'elles sont exécutées par un processeur, amènent le processeur à exécuter le procédé selon l'une quelconque des revendications 1 à 7.

9. Appareil de classification de scènes destiné à traiter les données provenant d'un système de capteurs RADAR ou LIDAR du véhicule, l'appareil comprenant :
une entrée destinée à recevoir de cartes de caractéristiques (21, 22) générées à partir de données de capteur RADAR ou LIDAR fournies par le système de capteurs RADAR ou LIDAR du véhicule, dans lequel les cartes de caractéristiques représentent un système de coordonnées centré sur le véhicule et la direction des rangées et des colonnes des cartes de caractéristiques est parallèle aux axes longitudinaux et latéraux respectifs du système de coordonnées ; et
un module d'encodage et de mise en commun destiné à traiter les cartes de caractéristiques à l'aide d'un regroupement de caractéristiques longitudinales (23) de chaque colonne longitudinale et d'un regroupement de caractéristiques latérales (26) de chaque rangée latérale pour générer des sorties du groupe de caractéristiques de colonne longitudinale et des sorties du groupe de caractéristiques de rangée latérale ;
un module de produit interne destiné à générer des produits internes à partir des sorties du groupe de caractéristiques longitudinales et latérales (24) ; et
un classificateur destiné à classifier la scène en fonction des produits internes générés (24).

10. Appareil de classification de scènes selon la revendication 9, dans lequel le module du produit interne est conçu pour concaténer les sorties du groupe de caractéristiques longitudinales et latérales.

11. Appareil de classification de scènes selon l'une quelconque des revendications 9 à 10, dans lequel le classificateur est conçu pour générer un ou plusieurs scores de classification de scènes à l'aide des produits internes générés (24).

12. Appareil de classification de scènes selon la revendication 11, dans lequel le ou les scores de classification de scènes fournissent une valeur de probabilité indiquant la probabilité que la scène associée soit détectée.

13. Appareil de classification de scènes selon l'une quelconque des revendications 9 à 12, comprenant en outre un système de détection d'objet destiné à traiter les données de capteur reçues du système de capteurs du véhicule pour générer les cartes de caractéristiques.
